# EUROPEAN PATENT APPLICATION

(11) **EP 4 488 246 A1**
(43) Date of publication of application: **08.01.2025**
(21) Application number: 24185143.5
(22) Date of filing: 27.06.2024
(51) Int. Cl.: C04B 35/83, B32B 18/00, F16D 65/12

(54) **LOW COST, LOW WEAR PREFORM**

(30) Priority: 29.06.2023 US 202318344774
(71) Applicant: Goodrich Corporation, Charlotte, NC 28217-4578 (US)
(72) Inventor: KIRKPATRICK, Christopher T., Pueblo West, CO, 81007 (US)
(74) Representative: Dehns

(57) **Abstract**

A method of fabricating a composite component is provided. The method includes forming a fibrous preform by: forming a first graphite powder and phenolic resin compound mixture layer over a first textile layer, the first graphite powder and phenolic resin compound mixture layer having a first group of graphite particles; disposing a second textile layer over the first graphite powder and phenolic resin compound mixture layer; forming a second graphite powder and phenolic resin compound mixture layer over the second textile layer, the second graphite powder and phenolic resin compound mixture layer having a second group of graphite particles; and disposing a third textile layer over the second graphite powder and phenolic resin compound mixture layer; and densifying the fibrous preform.

## Description

### FIELD

The present disclosure relates to preforms, and more specifically, to low cost, low wear carbon preforms.

### BACKGROUND

Aircrafts typically utilize brake systems on wheels to slow or stop the aircraft during landings, taxiing, and rejected takeoffs. Aircraft brake systems generally employ a brake stack comprising a series of friction disks that may be forced into contact with one another during braking to slow or stop the aircraft. The brake stack typically comprises rotor disks and stator disks that, in response to axial compressive pressure, convert the kinetic energy of the aircraft into heat through frictional forces experienced between the friction disks. Brake stacks comprising carbon fiber carbon matrix composite (C/C) components and/or carbon fiber ceramic matrix composite (CMC) components may prove advantageous in addressing frictional and wear performance.

Preform fabrication is a time-consuming, expensive part of making C/C composite components for aircrafts. In typical manufacturing, multiple layers of oxidized polyacrylonitrile (PAN) fiber (OPF) fabric are stacked and needled. In typical manufacturing, 50% or more of the material may then be cut away and wasted or recycled. In typical manufacturing, the preform is then carbonized, where 50% of the preform weight is lost. Then, in typical manufacturing and during densification, further preform material may be removed for CVD densification, which results in a preform that may be only 20-25% of the mass of the original preform.

### SUMMARY

According to various embodiments of the present disclosure, a method of fabricating a composite component is provided. The method includes forming a fibrous preform by: forming a first graphite powder and phenolic resin compound mixture layer over a first textile layer, the first graphite powder and phenolic resin compound mixture layer having a first group of graphite particles, disposing a second textile layer over the first graphite powder and phenolic resin compound mixture layer, forming a second graphite powder and phenolic resin compound mixture layer over the second textile layer, the second graphite powder and phenolic resin compound mixture layer having a second group of graphite particles, and disposing a third textile layer over the second graphite powder and phenolic resin compound mixture layer. The method further includes densifying the fibrous preform.

In various embodiments, the phenolic resin in the first graphite powder and phenolic resin compound mixture layer and the second graphite powder and phenolic resin compound mixture layer is carbonized during the densification. In various embodiments, the first group of graphite particles has a first average particle size and the second group of graphite particles has a second average particle size. In various embodiments, the first average particle size and the second average particle size are between 25 mesh and 400 mesh.

In various embodiments, the method further includes disposing a first web material fabric between the second textile layer and the first graphite powder and phenolic resin compound mixture layer and disposing a second web material fabric between the third textile layer and the second graphite powder and phenolic resin compound mixture layer.

In various embodiments, the method further includes prior to densifying the fibrous preform: forming a third graphite powder and phenolic resin compound mixture layer over the third textile layer, the third graphite powder and phenolic resin compound mixture layer having a third group of graphite particles, disposing a third web material fabric over the third graphite powder and phenolic resin compound mixture layer, and disposing a fourth textile layer over the third web material fabric. In various embodiments, the third group of graphite particles has a third average particle size. In various embodiments, the third average particle size is between 25 mesh and 400 mesh.

In various embodiments, the method further includes disposing the first textile layer on a first plate, locating a first shim around an outer perimeter of the first textile layer, locating a second shim around an outer perimeter of the second textile layer, disposing a second plate over the third textile layer, and applying a compressive load to the third textile layer. In various embodiments, at least one of the first plate or the second plate includes at least one of a groove or an orifice. In various embodiments, a fiber volume of the fibrous preform is controlled by varying the compressive load.

In various embodiments, the fibrous preform is a disk. In various embodiments, the method further includes machining the disk after the densification to a final form.

Also disclosed herein is a method of forming a fibrous preform for fabricating a composite component. The method includes locating a first fiber layer in a mold, forming a first layer of graphite powder and phenolic resin compound mixture over the first fiber layer, locating a second fiber layer in the mold and over the first layer of graphite powder and phenolic resin compound mixture, forming a second layer of graphite powder and phenolic resin compound mixture over the second fiber layer, locating a third fiber layer over the second layer of graphite powder and phenolic resin compound mixture, and densifying the layers. The first layer of graphite powder and phenolic resin compound mixture having a first group of graphite particles. The second layer of graphite powder and phenolic resin compound mixture having a second group of graphite particles.

In various embodiments, the phenolic resin in the first layer of graphite powder and phenolic resin compound mixture and the second layer of graphite powder and phenolic resin compound mixture is carbonized during the densification. In various embodiments, the first group of graphite particles has a first average particle size, and the second group of graphite particles has a second average particle size. In various embodiments, the first average particle size and the second average particle size are between 25 mesh and 400 mesh.

In various embodiments, the method further includes locating a first web material fabric between the second fiber layer and the first layer of graphite powder and phenolic resin compound mixture and locating a second web material fabric between the third fiber layer and the second layer of graphite powder and phenolic resin compound mixture. In various embodiments, the method further includes forming a third layer of graphite powder and phenolic resin compound mixture over the third fiber layer, the third layer of graphite powder and phenolic resin compound mixture having a third group of graphite particles, locating a third web material fabric over the third layer of graphite powder and phenolic resin compound mixture, and locating a fourth fiber layer over the third web material fabric. In various embodiments, the third group of graphite particles has a third average particle size. In various embodiments, the third average particle size is between 25 mesh and 400 mesh.

In various embodiments, the method further includes disposing the first fiber layer on a first plate; locating a first shim around an outer perimeter of the first fiber layer; locating a second shim around an outer perimeter of the second fiber layer; disposing a second plate over the third fiber layer, wherein at least one of the first plate or the second plate includes at least one of a groove or an orifice; and applying a compressive load to the third fiber layer.

Also disclosed herein is a fiber reinforced composite component. The fiber reinforced composite component includes a first fiber layer comprising a plurality of first carbon fibers; a second fiber layer comprising a plurality of second carbon fibers; a third fiber layer comprising a plurality of third carbon fibers; a first layer of graphite powder and phenolic resin compound mixture located between the first fiber layer and the second fiber layer, the first layer of graphite powder and phenolic resin compound mixture having a first group of graphite particles; a second layer of graphite powder and phenolic resin compound mixture located between the second fiber layer and the third fiber layer, the second layer of graphite powder and phenolic resin compound mixture having a second group of graphite particles; a plurality of carbon/carbon members located through the first fiber layer, the first layer of graphite powder and phenolic resin compound mixture, the second fiber layer, the second layer of graphite powder and phenolic resin compound mixture, and the third fiber layer; and a carbon matrix material encapsulating the plurality of first carbon fibers, the plurality of second carbon fibers, the plurality of third carbon fibers, the plurality of carbon/carbon members, the first layer of graphite powder and phenolic resin compound mixture, and the second layer of graphite powder and phenolic resin compound mixture, wherein the carbon matrix material defines a plurality of pores.

In various embodiments, the fiber reinforced composite component further includes a third layer of graphite powder and phenolic resin compound mixture over the third fiber layer, the third layer of graphite powder and phenolic resin compound mixture having a third group of graphite particles. In various embodiments, the first group of graphite particles has a first average particle size, the second group of graphite particles has a second average particle size, and the third group of graphite particles has a third average particle size, the first average particle size, the second average particle size, and the third average particle size being between 25 mesh and 400 mesh.

In various embodiments, the fiber reinforced composite component is densified for a predetermined period of time such that the phenolic resin in the first layer of graphite powder and phenolic resin compound mixture, the second layer of graphite powder and phenolic resin compound mixture, and the third layer of graphite powder and phenolic resin compound mixture is carbonized during the curing densification.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a multi-disk brake assembly, in accordance with various embodiments.
FIG. 2 illustrates a fibrous preform including graphite particle layers interspersed between fiber layers, in accordance with various embodiments.
FIG. 3 illustrates a plate for facilitating formation and densification of a fibrous preform having graphite particle layers interspersed between fiber layers, in accordance with various embodiments.
FIGS. 4A, 4B, 4C, and 4D illustrate a formation of a fibrous preform including graphite particle layers, in accordance with various embodiments.
FIG. 5 illustrates a cross-section view of a fibrous preform after densification and silicon melt infiltration, in accordance with various embodiments.
FIG. 6 illustrates a method of fabricating a composite component, in accordance with various embodiments.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

As stated previously, preform fabrication is a time-consuming, expensive part of making C/C composite components for aircrafts. In typical manufacturing, multiple layers of oxidized polyacrylonitrile (PAN) fiber (OPF) fabric are stacked and needled. In typical manufacturing, 50% or more of the material may then be cut away and wasted or recycled. In typical manufacturing, the preform is then carbonized, where 50% of the preform weight is lost. Then, in typical manufacturing and during densification, further preform material may be removed for CVD densification, which results in a disk that may be only 15-25% of the mass of the original preform.

Disclosed herein, in various embodiments, is a method of fabricating a composite component, i.e. a preform. In various embodiments, a stack is formed by layering carbonized open-braid fabric, open-weave fabric, and/or stretch broken fabric; a graphite powder and phenolic resin compound mixture; and a web material. In various embodiments, graphite powder may comprise particles with a particle size of between 25 mesh (∼707 microns) (∼0.028 inches) (30 grit) and 400 mesh (∼37 microns) (∼0.0014 inches). In various embodiments, the relative size of the particles within the graphite powder does not impede chemical vapor deposition (CVD) densification, but rather reduces the amount of time needed for the CVD to be completed. In various embodiments, the web material may be a short fiber, carbonized material lightly needled together to form a uniform felt material. In various embodiments, the stack may be formed on a mandrel or mold. In various embodiments, once the layered stack is formed, z-direction carbon fibers may be introduced through the layers of preform to provide z-direction reinforcement to the final preform disk. In various embodiments, the layered stack may be loaded into a multi-platen press in order to press and/or cure the layered stack into a solidified preform disk. In various embodiments, the fiber volume of the layered stack may be controlled by varying a mechanical load of the multi-platen press. Once cured, the preform disk may be densified using CVD between at least one of seal rings, seal plates, or flexible graphite sheet such as that sold under the trademark GRAFOIL^{®} or carbon spacers. In various embodiments, the phenolic resin in the graphite powder and phenolic resin compound mixture may be carbonized during the CVD process. Once the CVD process is complete, in various embodiments, if a preform disk was manufactured, then the preform disk may receive a first (final) machining. In various embodiments, the disk may undergo a secondary CVD if necessary. In the event that a secondary CVD is not needed or after the second CVD, the disk may receive a final machining.

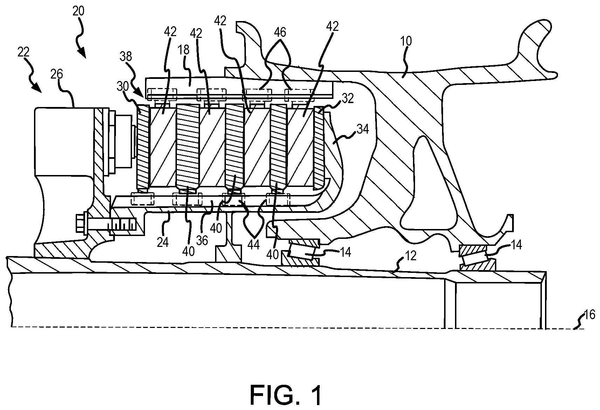

With reference to FIG. 1, a multi-disk brake assembly 20 is illustrated, in accordance with various embodiments. Multi-disk brake assembly 20 is mounted on an axle 12 for use with a wheel 10 disposed on and configured to rotate about the axle 12 via one or more bearing assemblies 14. A central axis 16 extends through the axle 12 and defines a center of rotation of the wheel 10. A torque tube 24 (sometimes referred to as a torque plate barrel or a torque plate) is aligned concentrically with the central axis 16. Wheel 10 is rotatable relative to the torque tube 24. Torque tube 24 includes a series of axially extending stator splines 36 (one shown). Wheel 10 includes a series of axially extending rotor splines 18 (one shown). Rotation of wheel 10 is modulated by multi-disk brake assembly 20.

Multi-disk brake assembly 20 includes a plurality of brake disks 38. The plurality of brake disks 38 includes at least one non-rotatable friction disk 40 (also referred to as a stator disk), and at least one rotatable friction disk 42 (as referred to as a rotor disk). Each of the brake disks 38 includes an attachment structure. For example, each of the stator disks 40 includes a plurality of stator lugs 44 at circumferentially spaced positions around an inner circumference of the stator disk 40, and each of the rotor disks 42 includes a plurality of rotor lugs 46 at circumferentially spaced positions around an outer circumference of the rotor disk 42.

Brake disks 38 may also include an end plate 32 and a pressure plate 30. End plate 32 and pressure plate 30 are located on opposing axial ends of the brake disk stack relative to one another. End plate 32 is connected to, or is otherwise frictionally engaged with, a reaction plate 34 of torque tube 24. End plate 32 is non-rotatable by virtue of its connection to torque tube 24. Stator splines 36 may support the pressure plate 30 such that pressure plate 30 is also non-rotatable. Stator splines 36 may also support the stator disks 40. Stator splines 36 are located in gaps formed between the stator lugs 44 of the stator disk 40. Similarly, rotor splines 18 gaps formed between the rotor lugs 46 of the rotor disk 42. Rotor disks 42 may be rotatable by virtue of their engagement with rotor splines 18 of wheel 10.

An actuating mechanism for the multi-disk brake assembly 20 includes a plurality of piston assemblies 22 (one shown) circumferentially spaced around a piston housing 26. Upon actuation, the plurality of piston assemblies 22 affects a braking action by urging pressure plate 30, stator disks 40, and end plate 32 into frictional engagement with the rotor disks 42. Through compression of the plurality of rotor disks 42 and the plurality of stator disks 40 between the pressure plate 30 and the end plate 32, the resulting frictional contact slows or stops or otherwise prevents rotation of the wheel 10.

In various embodiments, one or more of the friction disks (e.g., rotor disks 42, stator disks 40, pressure plate 30, end plate 32) are fabricated from composite materials, such as, for example, C/C and/or CMC, which enable the brake disks to withstand and dissipate the heat generated during and following a braking action. In various embodiments, the non-rotating frictional components of multi-disk brake assembly 20 (i.e., pressure plate 30, end plate 32, and stator disks 40) may comprise a material that is different from the material of the rotating frictional component (e.g., rotor disks 42). For example, in various embodiments, rotor disks 42 comprise C/C and pressure plate 30, end plate 32, and/or stator disks 40 may comprise CMC. In various embodiments, rotor disks 42 and/or stator disks 40 may comprise a core made of a first material (e.g., CMC) and wear liners attached to the core that are made of a second, different material (e.g., C/C).

As described in further detail below, the process of interspersing the graphite powder and phenolic resin compound mixture into the C/C is performed by depositing a graphite powder and phenolic resin compound mixture between one or more fiber layers of the fibrous preform used to form the friction disk. In various embodiments, the graphite powder and phenolic resin compound mixture may comprise a mix of difference size graphite particles. After forming the fibrous preform, including one or more layers of graphite particles, the fibrous preform is densified using chemical vapor deposition (CVD). During densification, a matrix material (e.g., a carbon matrix) is deposited on and encapsulates the graphite particles and the fibers of the fiber layers.

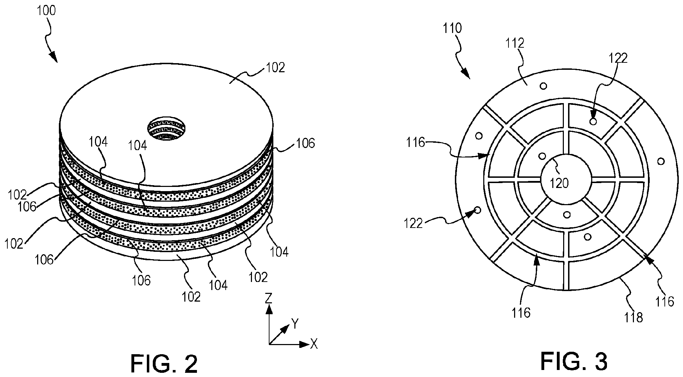

Referring now to FIG. 2, a fibrous preform 100 including graphite particle layers interspersed between fiber layers is illustrated, in accordance with various embodiments. Fibrous preform 100 may be employed to form a friction disk, as described above. Fibrous preform 100 may comprise a plurality of stacked fiber layers 102. Each fiber layer 102 has a first dimension in the axial, or "Z", direction that may be substantially less than the dimensions of the fiber layer 102 in the radial and circumferential directions. As used herein, the term "axial" refers to directions parallel with central axis 16 in FIG. 1 (e.g., parallel to the Z-axis on the provided X-Y-Z axes). As used herein, the term "radial" refers to directions perpendicular to central axis 16 in FIG. 1 (e.g., directions parallel to a plane formed by the X-axis and the Y-axis). For example, a first component that is radially outward of a second component is located a greater distance from central axis 16 as compared to the second component. As used herein, the term "circumferential" refers to directions about central axis 16 in FIG. 1 (e.g., directions about the Z-axis).

In various embodiments, fiber layers 102 comprises woven, braided, or knitted carbon fibers. In various embodiments, one or more of the fiber layers 102 may comprise carbon fibers in an open weave pattern (i.e., a weave wherein there is increased distance between the warp tows and between the weft tows). In various embodiments, each fiber layer 102 is between 15% and 95% open area. As used herein "open area" refers to the area that does not include carbon fibers. For example, a fiber layer 102 having 25% open area means 75% of the total area of the fiber layer 102 is carbon fiber. In various embodiments, fiber layer 102 is between 25% and 75% open area. In various embodiments, fiber layer 102 is between 25% and 50% open area. In various embodiments, the open area may vary between fiber layers 102. In this regard, a first fiber layer 102 may include a first open area and a second fiber layer 102 may include a second open area that is different from the first opening area. Employing open weave patterns tends to make fiber layer 102 generally easier to shape.

In various embodiments, one or more of the fiber layers 102 may comprise stretch-broken carbon fibers. Employing stretch-broken carbon fibers tends to increase the bonding or securing of a graphite powder and phenolic resin compound mixture within the fiber layer and the composite part. In various embodiments, the carbon fibers may be derived from polyacrylonitrile (PAN), rayon (synthetic fiber derived from cellulose), oxidized polyacrylonitrile fiber (OPF), carbon pitch, or the like. The starting fiber may be pre-oxidized PAN or fully carbonized commercial carbon fiber. The fiber layers 102 may be formed or cut having any desired shape or form. For example, the fiber layers 102 may have any shape such as, for example, a polygon, circular, triangle, square, rectangle, pentagon, hexagon, octagon, or any other desired shape. In various embodiments, fiber layers 102 and fibrous preform 100 may have a generally annular shape. In various embodiments, fiber layers 102 and fibrous preform 100 may have a generally annular shape with protrusions extending radially outward from the outer circumferential surface. In various embodiments, fiber layers 102 and fibrous preform 100 may have a generally annular shape with protrusions extending radially inward from the inner circumferential surface.

In various embodiments, fibrous preform 100 includes one or more graphite powder and phenolic resin compound mixture layers 104. Each of the graphite powder and phenolic resin compound mixture layers 104 is located between a pair of adjacent fiber layers 102. In various embodiments, the graphite powder and phenolic resin compound mixture layers 104 may be comprised of graphite powder particles. A range of particle sizes (or powder sizes) may be employed in the graphite powder used to fabricate the graphite powder and phenolic resin compound mixture layers 104. For example, in various embodiments, a graphite powder between 60 grit and 275 grit may be selected for graphite powder and phenolic resin compound mixture layers 104. In various embodiments, a graphite powder between 80 grit and 250 grit may be selected for graphite powder and phenolic resin compound mixture layers 104. In various embodiments, a graphite powder between 100 grit and 200 grit may be selected for graphite powder and phenolic resin compound mixture layers 104. In various embodiments, a 150-grit graphite powder may be used to form graphite powder and phenolic resin compound mixture layers 104. Stated differently, the graphite particles may have an average particle size between about 37 micrometers (µm) and about 254 µm, between about 51 µm and about 165 µm, between about 70 µm and about 122 µm, and/or about 89 µm (i.e., between about 0.0015 inches and about 0.0100 inches, between about 0.0020 inches and about 0.0065 inches, between about 0.0028 inches and about 0.0048 inches, and/or about 0.0035 inches). As used in the previous context only, the term "about" means plus or minus ten percent of the associated value.

In various embodiments, one or more of the graphite powder and phenolic resin compound mixture layers 104 may include a mixture of particle sizes. In various embodiments, the graphite powder and phenolic resin compound mixture layer 104 comprises a first group of graphite particles having a first average particle size, and a second group of graphite particles having a second average particle size greater than the first average particle size. In various embodiments, the graphite powder and phenolic resin compound mixture particles of the first group may have a first average particle size between 60 grit and 180 grit, between 60 grit and 150 grit, or between 80 grit and 120 grit. Stated differently, the first group of graphite particles may have a first average particle size between 254.0 µm and 76.0 µm (between 0.0100 inches and 0.0030 inches), between 245.0 µm and 89.0 µm (between 0.0096 inches and 0.0035 inches), or between 165.0 µm and 102.0 µm (between 0.0065 inches and 0.0035 inches).

In various embodiments, the graphite particles of the second group have a second average particle size between 120 grit and 275 grit, between 120 grit and 240 grit, or between 180 grit and 240 grit. Stated differently, the second group of graphite particles may have a second average particle size between 102.0 µm and 40.0 µm (between 0.0040 inches and 0.0016 inches), between 102.0 µm and 50.0 µm (0.0040 inches and 0.0020 inches), or between 76 µm and 50 µm (0.0030 inches and 0.0020 inches).

In various embodiments, the graphite particles of the first average particle size (i.e., the larger particle size) form a larger weight percentage of particle mixture as compared to the weight percentage formed by the graphite particles of the second average size. For example, the graphite particle mix of one or more of the graphite powder and phenolic resin compound mixture layer(s) 104 may comprise from 55% to 95% by weight graphite particles having the first average particle size and from 45% to 5% by weight graphite particles having the second average particle size. In various embodiments, the graphite particle mix of one or more of the graphite powder and phenolic resin compound mixture layer(s) 104 may comprise from 70% to 90% by weight graphite particles having the first average particle size and from 30% to 10% by weight graphite particles having the second average particle size. In various embodiments, the graphite particle mix of one or more of the graphite powder and phenolic resin compound mixture layer(s) 104 may comprise from 80% to 90% by weight graphite particles having the first average particle size and from 20% to 10% by weight graphite particles having the second average particle size. In various embodiments, the graphite powder and phenolic resin compound mixture layers 104 may include a mixture of graphite powder and phenolic resin powder. The phenolic resin powder may form, for example, between 0.5% and 30%, between 1.0% and 10.0%, or between 2.0% and 8.0% by weight of the total graphite-powder-phenolic-resin powder mixture. Phenolic resin powder tends to facilitate even distribution of the graphite powder.

In various embodiments, fibrous preform 100 further includes web fabric material layers 106. Each of the web fabric material layers 106 is located between a graphite powder and phenolic resin compound mixture layer 104 and an adjacent fiber layer 102. In various embodiments, each of the web fabric material layers 106 improves a wear rate of the fibrous preform. In various embodiments, each of the web fabric material layers 106, which is a low fiber volume material, provide for improved flow characteristics so that, during densification using CVD, a matrix material (e.g., a carbon matrix) that is deposited on the fibrous preform easily encapsulates the graphite particles and the fibers of the fiber layers.

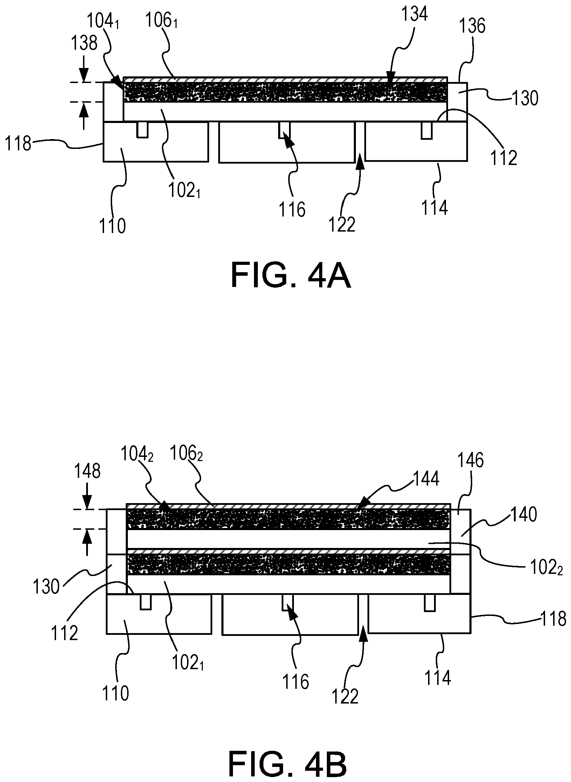

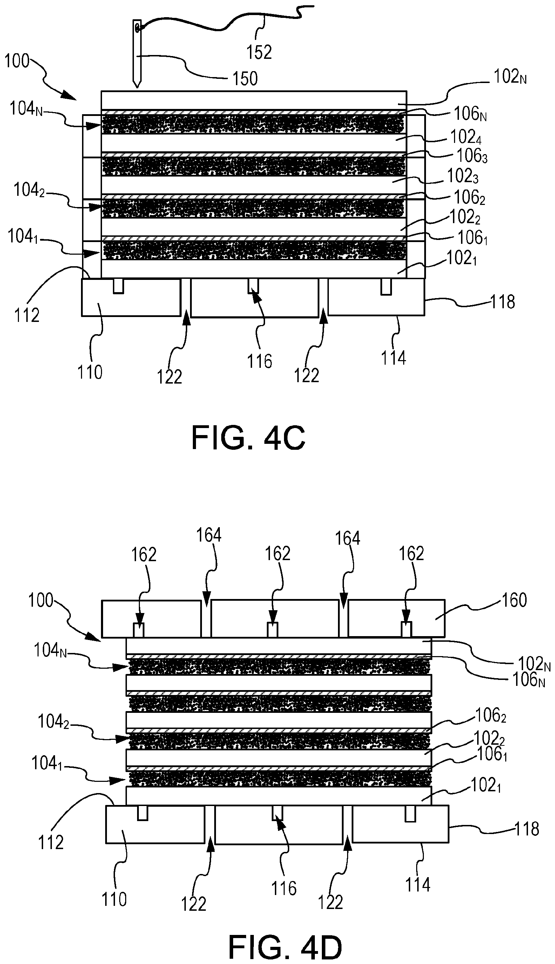

With reference to FIGS. 4A, 4B, 4C, and 4D, a formation of fibrous preform 100 including graphite particle layers is illustrated, in accordance with various embodiments. In FIG. 4A, a first fiber layer 102₁ is located on a plate 110. FIG. 3 illustrates plate 110 for facilitating formation and densification of a fibrous preform having graphite particle layers interspersed between fiber layers, in accordance with various embodiments. With combined reference to FIGS. 3 and 4A, plate 110 includes opposing surfaces 112 and 114. First fiber layer 102₁ may be located on surface 112 of plate 110. A plurality of grooves, or channels, 116 may be formed into surface 112. Stated differently, surface 112 of plate 110 may define grooves 116. Grooves 116 may extend from an outer circumferential surface 118 and/or from an inner circumferential surface 120 of plate 110. In various embodiments, plate 110 may include one or more orifices 122 extending from surface 112 to surface 114. Grooves 116 and orifices 122 tend to facilitate the flow of gas into the fibrous preform during densification. Grooves 116 and orifices 122 may be formed in any desired pattern. While plate 110 is illustrated as having an annular shape, it is contemplated and understood that plate 110 may have any desired shape. In various embodiments, the shape of plate 110 matches the shape of fiber layers 102.

With continued reference to FIG. 4A, a first shim, or spacer, 130 is located around an outer perimeter (or outer circumference) 132 of first fiber layer 102₁. For fiber layers having an annular shape, a shim is also located along the inner perimeter (or inner circumference). With first shim 130 in place, a graphite powder and phenolic resin compound mixture 134 is deposited (e.g., poured) over first fiber layer 102₁. The graphite powder and phenolic resin compound mixture 134 is deposited until, at least, an upper surface 136 of first shim 130 is reached (i.e., until the volume defined by first shim 130 and first fiber layer 102₁ is filled, or substantially filled, with a graphite powder and phenolic resin compound mixture 134). In various embodiments, a scrapper or leveler may be translated (i.e., slid) over the graphite powder and phenolic resin compound mixture 134 and first shim 130 to remove any portion of the graphite powder and phenolic resin compound mixture 134 which may be extending beyond upper surface 136 of first shim 130. In this regard, after scraping, the graphite powder and phenolic resin compound mixture 134 forms a first graphite powder and phenolic resin compound mixture layer 104₁ having a thickness 138. With the graphite powder and phenolic resin compound mixture 134 deposited, a web material layer 106₁ may then be placed on top of the graphite powder and phenolic resin compound mixture 134.

With reference to FIG. 4B, a second fiber layer 102₂ is located over first graphite powder and phenolic resin compound mixture layer 104₁. A second shim 140 is located over first shim 130 and around the outer perimeter of second fiber layer 102₂. For fiber layers 102 having an annular shape, a shim is also located along the inner perimeter (or inner circumference) of the fiber layer 102. With second shim 140 in place, graphite powder and phenolic resin compound mixture 144 is deposited (e.g., poured) over second fiber layer 102₂. The graphite powder and phenolic resin compound mixture 144 is deposited until at least an upper surface 146 of second shim 140 is reached (i.e., until the volume defined by second shim 140 and second fiber layer 102₂ is filled, or substantially filled, with graphite powder and phenolic resin compound mixture 144). In various embodiments, a scrapper or leveler may be translated or slid over graphite powder and phenolic resin compound mixture 144 and second shim 140 to remove all or at least a portion of graphite powder and phenolic resin compound mixture 144 which may be extending beyond upper surface 146 of second shim 140. In this regard, after scraping, the graphite powder and phenolic resin compound mixture 144 forms a second graphite powder and phenolic resin compound mixture layer 104₂ having a thickness 148. Thickness 148 may be equal to thickness 138 (FIG. 4A). This process may be repeated until a desired number of fiber layers 102 and graphite powder and phenolic resin compound mixture layers 104 is achieved (i.e., stacked). With the graphite powder and phenolic resin compound mixture 144 deposited, a web material layer 106₂ may then be placed on top of the graphite powder and phenolic resin compound mixture 144.

With reference to FIG. 4C, once the desired number of fiber layers 102, graphite powder and phenolic resin compound mixture layers 104, and web fabric material layer 106 have been formed (i.e., stacked), the fibrous preform 100 is needled. For example, a needle 150 may be used to weave a carbon fiber 152 between first fiber layer 102₁ and final fiber layer 102_{N}. In this regard, carbon fiber 152 may extend in the Z (or axial) direction between fiber layers 102. In various embodiments, a needling operation may be performed after each fiber layer 102 is stacked or at any desired interval. In this regard, the fibrous preform 100 may include Z-direction fibers of varying axial length. For example, one tow of Z-direction fibers may extend between the first fiber layer 102₁ and the second fiber layer 102₂, another tow of Z-direction fibers may extend between the first fiber layer 102₁ and the third fiber layer 102₃, another tow of Z-direction fibers may extend between the first fiber layer 102₁ and the final fiber layer 102_{N}, another tow of Z-direction fibers may extend between the final fiber layer 102_{N} and the second fiber layer 102₂, etc.

With reference to FIG. 4D, after needling, the shims are removed and a plate 160 is located over the final fiber layer 102_{N}. In this regard, plate 110 and plate 160 are located over opposing ends of fibrous preform 100. Plate 160 may include grooves 162 and/or orifices 164, similar to grooves 116 and orifices 122 in plate 110.

In various embodiments, a compressive load may be applied to fibrous preform 100. For example, in response to removing the shims, the weight of plate 160 may compress the fibrous preform 100 between plate 110 and plate 160. In various embodiments, a compressive load may be applied to plate 160 to compress fibrous preform 100 between plate 110 and plate 160. In various embodiments, one or more clamps may be attached between plate 110 and plate 160. The clamps are configured to compress fibrous preform 100 between plate 110 and plate 160.

In various embodiments, heat is added to the fibrous preform 100 during a press cure process. For example, a tool may be a heated press whereby heat is conducted from the tool into the fibrous preform 100. In various embodiments, the tool may be placed in an oven or heated platen press before or during the press process. In various embodiments, components of the tool may be heated in an oven or heated platen press prior to being introduced to the fibrous preform 100, for example to a shape forming temperature of between 150°F and 400°F (65°C - 205°C) in various embodiments, between 200°F and 350°F (93°C - 177°C) in various embodiments, between 200°F and 300°F (93°C - 149°C) in various embodiments, and between 225°F and 275°F (107°C - 135°C) in various embodiments. In various embodiments, the fibrous preform 100 and plates 110, 160 are then placed in a CVD furnace for densification.

In various embodiments, after densification, the fibrous preform 100 may be machined to form the final desired part shape. The machining may also expose/open a fresh carbon surface. This fresh surface tends to be easier for molten silicon to wet-out. In this regard, machining the surfaces of the densified preform may allow the silicon to better wet the preform surfaces.

In various embodiments, there are a plurality of graphite powder and phenolic resin compound mixture layers between the first graphite powder and phenolic resin compound mixture layer 104₁ and a final graphite powder and phenolic resin compound mixture layer 104_{N}. If, for instance, there are three graphite powder and phenolic resin compound mixture layers, the first graphite powder and phenolic resin compound mixture layer 104₁ and the final graphite powder and phenolic resin compound mixture layer 104_{N} are outer layers with second graphite powder and phenolic resin compound mixture layer 104₂ as a middle layer. The middle, or center, relative to the axial direction, of the disk may be composed of finer graphite grit mixtures (e.g., grit sizes of approximately 200-275) whereas the outer surfaces may use courser grit size mixtures. For instance, a fine grit size may be a 200-275 grit size (e.g., particles with a diameter less than 60.0 microns), a medium grit size may be a 120-180 grit size (e.g., particles with a diameter between 60.0-100.0 microns), and a course grit may be a 60-100 grit size (e.g., particles with a diameter greater than 100.0 microns), approximately. Using smaller sizes in the current CVD process, "self-limits" penetration of silicon. In other words, when the pores get small enough during the reaction between silicon and carbon during the melt infiltration process, the conversion process blocks off additional or further infiltration. For instance, in a long-hour CVD cycle, grit sizes of 240-400 tend to "seal off." For instance, the pore size is reduced to zero (e.g., the pore is closed). Accordingly, smaller grit sizes may be used toward the center layer with larger grit sizes on the outside to tailor the depth of penetration. The full infiltration on the outer layer (e.g., 6.35 mm) may serve as oxidation protection while limiting the detrimental specific heat effect of the silicon throughout by varying the smallest grit size one gets to the center of the part. Accordingly, there is a relationship between the graphite grit size and the number of hours of CVD. Based on the graphite grit size and the number of hours of CVD, the penetration depth of the silicon may be controlled.

For example, if all the different grit mixtures (e.g., the first and second group of graphite particles) comprise a coarser grit of 60 grit, the outside, or first graphite powder and phenolic resin compound mixture layer 104₁, may have a 60 grit/120 grit mixture. For instance, the 60 grib120 grit mixture may include 80% 60 grit and 20% 120 grit Each graphite powder and phenolic resin compound mixture layer may be 0.10 inches (i.e., 2.54 mm), where the following layer may be a 60 grit/150 grit combination (e.g., 80%/20%, respectively), followed by a 60 grit/180 grit combination (e.g., 80%/20%, respectively), and a 60 grit/275 grit (e.g., 80%/20%, respectively) at the center, or core, of the component such that the reaction forms pores that vary in size from larger to smaller. Typically, the outside densifies more readily than the inside because the pore network is the same throughout the part, but by varying the grit size combinations from outside to inside, the part can more uniformly densify because the smaller grit pickup CVD density more quickly, and thus also seal more quickly. As another example, the center may comprise a 60 grit and 275 grit combination, thereby resulting in no silicon infiltration in the core. A 60 grit/150 grit combination may be used on the outer surfaces so that you limit the penetration to only where a coarser grit mixture is utilized. Further, the CVD run times coincide with the grit sizes and resulting porosity. In other words, as the CVD processing hours increase, the pore sizes decreases, thus allowing less silicon to penetrate.

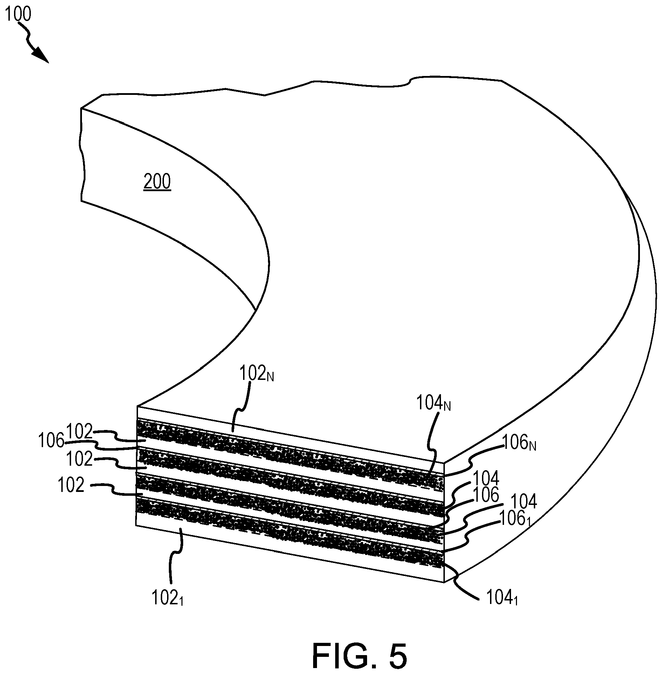

FIG. 5 shows a cross-section view of fibrous preform 100 after densification, in accordance with various embodiments. After densification, fibrous preform 100 forms a fiber-reinforced composite component 200. Stated differently, the densified and silicon infiltrated fibrous preform is a fiber-reinforced composite component. The porosity, or open space, between the carbon fibers of fiber layers 102 and between the graphite particles of graphite powder and phenolic resin compound mixture layers 104 is filled, or substantially filled, with carbon matrix. It is contemplated and understood that graphite particles may infiltrate and be located within the fiber layers 102.

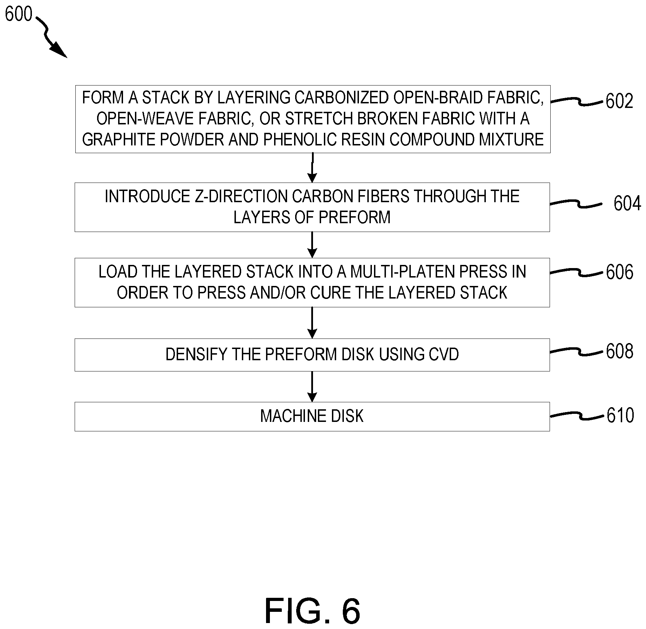

With refence to FIG. 6, a method 600 of fabricating a composite component is illustrated. At block 602, a stack is formed by layering carbonized open-braid fabric, open-weave fabric, or stretch broken fabric with a graphite powder and phenolic resin compound mixture. In various embodiment, a web material may be added to the stack. At block 604, once the layered stack is formed, z-direction carbon fibers may be introduced through the layers of preform to provide z-direction reinforcement to the final preform disk. At block 606, the layered stack may be loaded into a multi-platen press in order to press and/or cure the layered stack into solidified preform disk. At block 608, once the preform disk is cured, the preform disk may be densified using CVD between at least one of seal rings, seal plates, flexible graphite sheet such as that sold under the trademark GRAFOIL^{®}, or carbon spacers. At block 610, the disk receives a first (final) machining.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

The steps recited in any of the method or process descriptions may be executed in any order and are not necessarily limited to the order presented. Furthermore, any reference to singular includes plural embodiments, and any reference to more than one component or step may include a singular embodiment or step. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts or areas but not necessarily to denote the same or different materials. In some cases, reference coordinates may be specific to each figure.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of fabricating a composite component, comprising:
forming a fibrous preform by:
forming a first graphite powder and phenolic resin compound mixture layer over a first textile layer, the first graphite powder and phenolic resin compound mixture layer having a first group of graphite particles;
disposing a second textile layer over the first graphite powder and phenolic resin compound mixture layer;
forming a second graphite powder and phenolic resin compound mixture layer over the second textile layer, the second graphite powder and phenolic resin compound mixture layer having a second group of graphite particles; and
disposing a third textile layer over the second graphite powder and phenolic resin compound mixture layer; and
densifying the fibrous preform.

2. The method of claim 1, wherein the phenolic resin in the first graphite powder and phenolic resin compound mixture layer and the second graphite powder and phenolic resin compound mixture layer is carbonized during the densification.

3. The method of claim 1 or 2,
wherein the first group of graphite particles has a first average particle size, and the second group of graphite particles has a second average particle size, and
wherein the first average particle size and the second average particle size are between 25 mesh and 400 mesh.

4. The method of claim 1, 2 or 3, further comprising:
disposing a first web material fabric between the second textile layer and the first graphite powder and phenolic resin compound mixture layer; and
disposing a second web material fabric between the third textile layer and the second graphite powder and phenolic resin compound mixture layer.

5. The method of claim 4, further comprising:
prior to densifying the fibrous preform:
forming a third graphite powder and phenolic resin compound mixture layer over the third textile layer, the third graphite powder and phenolic resin compound mixture layer having a third group of graphite particles;
disposing a third web material fabric over the third graphite powder and phenolic resin compound mixture layer; and
disposing a fourth textile layer over the third web material fabric; and optionally:
wherein the third group of graphite particles has a third average particle size, and
wherein the third average particle size is between 25 mesh and 400 mesh.

6. The method of any preceding claim, further comprising:
disposing the first textile layer on a first plate;
locating a first shim around an outer perimeter of the first textile layer;
locating a second shim around an outer perimeter of the second textile layer;
disposing a second plate over the third textile layer, wherein at least one of the first plate or the second plate includes at least one of a groove or an orifice; and
applying a compressive load to the third textile layer; and optionally wherein a fiber volume of the fibrous preform is controlled by varying the compressive load.

7. The method of any preceding claim 1, wherein the fibrous preform is a disk and wherein the method further comprises:
machining the disk after the densification to a final form.

8. A method of forming a fibrous preform for fabricating a composite component, comprising:
locating a first fiber layer in a mold;
forming a first layer of graphite powder and phenolic resin compound mixture over the first fiber layer, the first layer of graphite powder and phenolic resin compound mixture having a first group of graphite particles;
locating a second fiber layer in the mold and over the first layer of graphite powder and phenolic resin compound mixture;
forming a second layer of graphite powder and phenolic resin compound mixture over the second fiber layer, the second layer of graphite powder and phenolic resin compound mixture having a second group of graphite particles;
locating a third fiber layer over the second layer of graphite powder and phenolic resin compound mixture; and
densifying the layers.

9. The method of claim 8, wherein the phenolic resin in the first layer of graphite powder and phenolic resin compound mixture and the second layer of graphite powder and phenolic resin compound mixture is carbonized during the densification;
and/or:
wherein the first group of graphite particles has a first average particle size, and the second group of graphite particles has a second average particle size, and
wherein the first average particle size and the second average particle size are between 25 mesh and 400 mesh.

10. The method of claim 8 or 9, further comprising:
locating a first web material fabric between the second fiber layer and the first layer of graphite powder and phenolic resin compound mixture; and
locating a second web material fabric between the third fiber layer and the second layer of graphite powder and phenolic resin compound mixture.

11. The method of claim 8, 9 or 10, further comprising:
forming a third layer of graphite powder and phenolic resin compound mixture over the third fiber layer, the third layer of graphite powder and phenolic resin compound mixture having a third group of graphite particles;
locating a third web material fabric over the third layer of graphite powder and phenolic resin compound mixture; and
locating a fourth fiber layer over the third web material fabric; and optionally:
wherein the third group of graphite particles has a third average particle size, and
wherein the third average particle size is between 25 mesh and 400 mesh.

12. The method of any of claims 8 to 11, further comprising:
disposing the first fiber layer on a first plate;
locating a first shim around an outer perimeter of the first fiber layer;
locating a second shim around an outer perimeter of the second fiber layer;
disposing a second plate over the third fiber layer, wherein at least one of the first plate or the second plate includes at least one of a groove or an orifice; and
applying a compressive load to the third fiber layer.

13. A fiber reinforced composite component, comprising:
a first fiber layer (102i) comprising a plurality of first carbon fibers;
a second fiber layer (102₂) comprising a plurality of second carbon fibers;
a third fiber layer (102₃) comprising a plurality of third carbon fibers;
a first layer of graphite powder and phenolic resin compound mixture (104₁) located between the first fiber layer and the second fiber layer, the first layer of graphite powder and phenolic resin compound mixture having a first group of graphite particles;
a second layer of graphite powder and phenolic resin compound mixture (104₂) located between the second fiber layer and the third fiber layer, the second layer of graphite powder and phenolic resin compound mixture having a second group of graphite particles;
a plurality of carbon/carbon members located through the first fiber layer, the first layer of graphite powder and phenolic resin compound mixture, the second fiber layer, the second layer of graphite powder and phenolic resin compound mixture, and the third fiber layer; and
a carbon matrix material encapsulating the plurality of first carbon fibers, the plurality of second carbon fibers, the plurality of third carbon fibers, the plurality of carbon/carbon members, the first layer of graphite powder and phenolic resin compound mixture, and the second layer of graphite powder and phenolic resin compound mixture, wherein the carbon matrix material defines a plurality of pores.

14. The fiber reinforced composite component of claim 13, further comprising a third layer of graphite powder and phenolic resin compound mixture (104₃) over the third fiber layer (102₃), the third layer of graphite powder and phenolic resin compound mixture having a third group of graphite particles.

15. The fiber reinforced composite component of claim 13 or 14, wherein the first group of graphite particles has a first average particle size, the second group of graphite particles has a second average particle size, and the third group of graphite particles has a third average particle size, the first average particle size, the second average particle size, and the third average particle size being between 25 mesh and 400 mesh;
and/or:
wherein the fiber reinforced composite component is densified for a predetermined period of time such that the phenolic resin in the first layer of graphite powder and phenolic resin compound mixture (104₁), the second layer of graphite powder and phenolic resin compound mixture (104₂), and the third layer of graphite powder and phenolic resin compound mixture (104₃) is carbonized during the densification.
